# EUROPEAN PATENT SPECIFICATION

(11) **EP 2 029 361 B1**
(45) Date of publication and mention of the grant of the patent: **08.08.2012**
(21) Application number: 07777391.9
(22) Date of filing: 04.06.2007
(51) Int. Cl.: B41C 1/05, B23K 26/06

(54) **DIRECT ENGRAVING OF FLEXOGRAPHIC PRINTING PLATES**
DIREKTGRAVUR VON FLEXODRUCKPLATTEN
GRAVURE DIRECTE DE CIRCUITS IMPRIMÉS FLEXOGRAPHIQUES

(30) Priority: 19.06.2006 US 424919
(43) Date of publication of application: 04.03.2009
(73) Proprietor: Eastman Kodak Company, Rochester, NY 14650-2201 (US)
(72) Inventor: EYAL, Ophir, 47272 Ramat Ha-sharon (IL); LIBERMAN, Moshe, 75774 Rishon-lezion (IL); PELLMAN, Asaf, 37000 Pardes-hanna (IL); RAUCHBACH, Rina, Pardesia (IL); CHAYET, Haim, 74039 Nes Ziona (IL)
(74) Representative: Weber, Etienne Nicolas
(86) International application number: PCT/US2007/013146
(87) International publication number: WO 2007/149208

(56) References cited:
- WO-A-2005/084874
- FR-A- 2 820 681
- GB-A- 2 323 177
- US-A- 4 947 023
- US-A- 6 150 629
- US-A1- 2005 134 676
- US-B2- 6 664 498

## Description

### FIELD OF THE INVENTION

This invention relates to a direct engraving printing system according to the preamble of claim 1. Such a direct engraving printing system is disclosed in document US 2005/0134676 A1.

### BACKGROUND OF THE INVENTION

Traditional flexographic printing methods prepare a printing plate by molding an elastomer such as rubber in a mold, or by photo-polymerizing a UV sensitive polymer. These methods are slow and expensive.

10 Another technique for creating a raised pattern on an elastomer surface is to directly cut the raised pattern using the well known NdYAG or CO₂ lasers, which are currently used as light sources in the direct engraving printing systems. The laser is controlled to ablate the elastomer in recessed areas and to leave the elastomer intact in raised areas. However, conventional flexographic 15 printing plates cannot be laser engraved quickly. This is because the laser ablates a relatively thick layer (0.5 mm - 2 mm) of elastomer. Thus, a multi KW laser is required to complete a typical flexographic plate in under one hour.

Another difficulty with previous attempts at laser engraving of flexographic printing surfaces with CO₂ lasers is that CO₂ lasers have a long 20 wavelength, 10.6 microns, relative to the approximately 1 micron of the diodes lasers, which severely limits the resolution that can be achieved. In addition, due to their long wavelength of CO₂ laser, there is a need to use optical elements for the far infrared. These are quite expensive relative to optical elements that are used for the near infrared.

25 U.S. Patent No. 6,150,629 (Sievers), describes a laser engraving system using two lasers with different wavelengths. Each laser can be modulated independently and temporally. The patent strictly talks of using temporal modulation to achieve different effects on the plate. The lasers are combined into one beam and imaged on the plate, using an external modulation acoustic optic 30 modulator.

The Sievers methods have several disadvantages; including:
- The different laser beams are focused to the same depth relative to the plate surface.
- The different laser beams are combined into one common optical path.
- External modulation using acousto optic modulators.

U.S. Patent No. 4,947,023 (Minamida), describes an apparatus for roll dulling by pulse laser beam. The system utilizes a number of lasers emitting light at equal wavelengths; the lasers can be combined into one or more optical paths. The beam divergence of the lasers can be manipulated via beam expanders in order to get different spot sizes on the plate surface. The Minamida system does not use different wavelengths, or optical elements to spatially focus different wavelengths to different depths relative to the plate surface.

U.S. Patent No. 6,664,498 (Forsman), describes a method and apparatus for increasing the material removal rate in laser machining. The intention of this patent, is to process materials, such as steel, aluminum, and silicon. There is no mention of printing plates. The main idea of the patent is to use high power pulsed lasers with bursts of very short laser pulses, usually with pulse duration in the nano second range. This objective cannot be achieved with fiber diodes.

### SUMMARY OF THE INVENTION

The invention is defined by independent claim 1. Possible additional features appear in dependent claims.

High power laser diodes and/or high power fiber coupled laser diodes are used instead of the well known powerful NdYAG and CO₂ lasers that are currently used as light sources in direct engraving printing systems. The multibeam optical head of the present invention incorporates numerous laser diodes each having relative moderate powers, of the order of 10 Watts per emitter width of 100 micron, instead of using an optical head which has just one or two powerful beams of NdYAG and CO₂ lasers that emit hundreds of Watts.

The advantages of using diode lasers instead of NdYAG and CO₂ lasers are that diode lasers are compact, reliable and can be modulated directly at relative high frequencies without need for external modulators. Diode lasers are also available at different wavelengths and at high powers. No gas is used and relative low voltage is needed.

Laser diodes are now already available at relative high powers of approximately 10 Watts per emitter width of 100 micron. This enables using high power diode lasers for direct engraving of new types of relatively sensitive flexographic printing plates.

Direct engraving flexographic printing plates have general emissivity close to one and therefore absorb any wavelength. Laser light that impinges on the plate is absorbed by the plate, and engraves shaped holes in the plate. The present invention also includes several embodiments using optical heads and methods by which the laser light is controlled in order to enhance the direct engraving and ablating effect. For example, according to one aspect of the present invention the optical imaging head for direct engraving of flexographic printing plates comprises at least two laser diodes emitting radiation in one or more wavelengths, and means for imaging one or more wavelengths of radiation at different depths relative to a surface of the plate.

### BRIEF DESCRIPTION OF THE DRAWINGS

Figure 1 is a schematic of one channel of a non-fiber optic system according to the present invention;
Figure 2 is a schematic of one channel of a fiber coupled system according to the present invention;
Figure 3 is a schematic of one channel of a non-fiber system using polarization beam combiners according to the present invention;
Figure 4 is a schematic of one channel of a fiber coupled system using polarization beam combiners according to the present invention;
Figure 5 is a ray trace and screen shots of spot sizes measured by two detectors;
Figure 6 is a schematic of one channel for a serial exposure mode according to the present invention;
Figure 7 is a schematic of one channel using two diodes having the same wavelength with fiber optics having different dimensions;
Figure 8 is a schematic of the embodiment shown in Figure 7 using diodes which emit at different wavelengths;
Figure 9 is a schematic of one channel of the present invention with the distal end of the fibers arranged in different object planes;
Figure 10 is a schematic of a system for measuring the relative shift in the image plane V, versus the fiber position in the object plane U;
Figure 11 is a graph showing relative shift in image plane versus fiber position U, in the object plane;
Figure 12 is an embodiment of the present invention incorporating a glass plate of thickness D and index of refraction n;
Figure 13 is an embodiment of the present invention incorporating a glass plate constructed from several zones, each having a different thickness and different or same index of refraction;
Figure 14 is an embodiment of the present invention incorporating a glass plate which has a variable profile of the index of refraction along the Y direction;
Figure 15 is a schematic showing an embodiment for confocal and auto-focus measurements useful in a diagnostics system;
Figure 16 shows conversion of a Gaussian beam profile to two types of top hat profiles by using diffractive elements;
Figure 17 shows a cross-section of a specific case where optical fibers are aligned in two V-grooves; and
Figure 18 is an expanded view of one of the V-grooves shown in Figure 17.

### DETAILED DESCRIPTION OF THE INVENTION

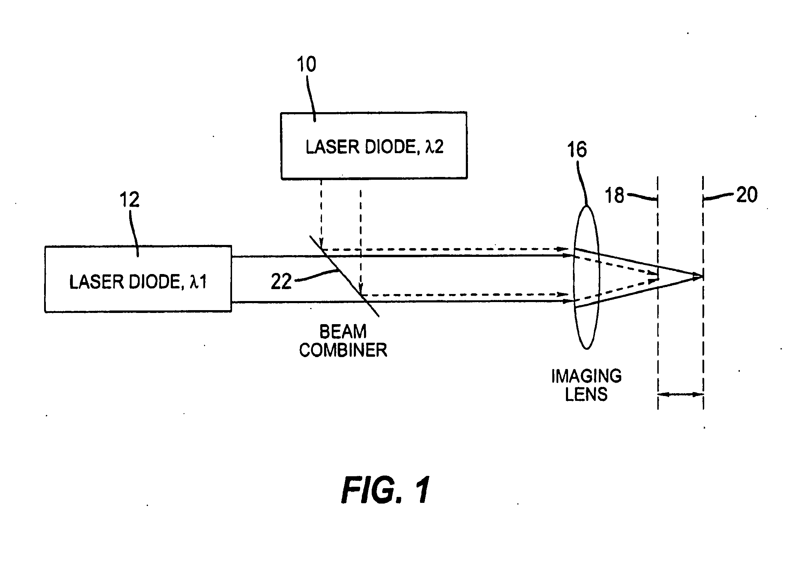

The present invention suggests several methods by which the laser diode light is controlled in order to enhance the direct engraving and ablating effect. Referring to Figure 1, the invention is described by the schemes shown for the specific case of two laser diodes 10, 12 that emit in two different wavelengths. By using laser diodes which emit at different wavelengths, and by controlling the dispersion of the imaging lens 16, the focus points 18, 20 at the different wavelengths will be shifted one relative to each other.

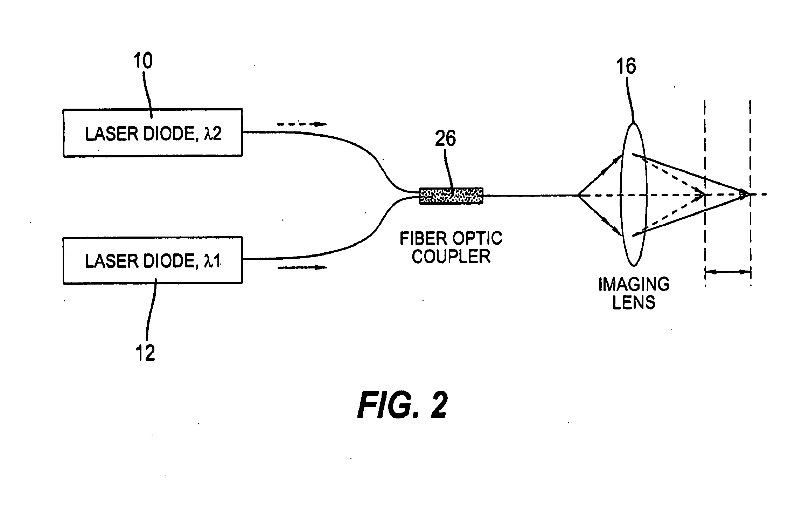

Figure 2 describes the same idea as Figure 1 for the case of fiber coupled diodes. The two different wavelengths are combined into one fiber using a fiber optic coupler 26 instead of the beam combiner 22.

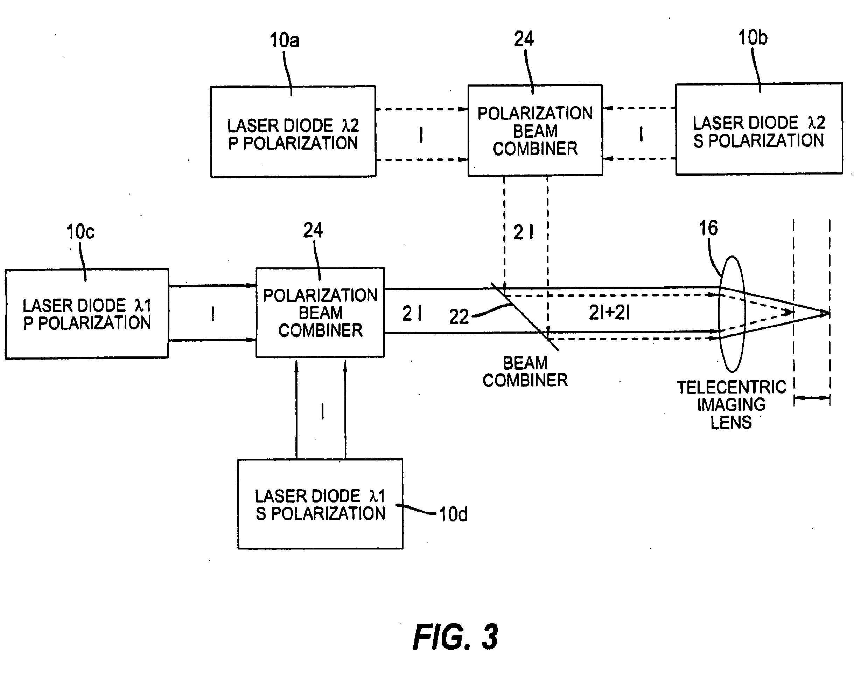

The light emitted from laser diodes is highly polarized. Therefore, by using a polarization beam combiner 24, shown in Figure 3, the power of two diodes that emit the same wavelength 10a, 10b can be combined into one path. Doing so the power of each wavelength is doubled and the overall power that impinges on the plate can be increased by four times. Polarization beam combiners are well known elements used in the optical field to couple light sources that have different configurations. Polarization beam combiners are available in both free space and fiber (mainly for single mode fibers) coupled configurations.

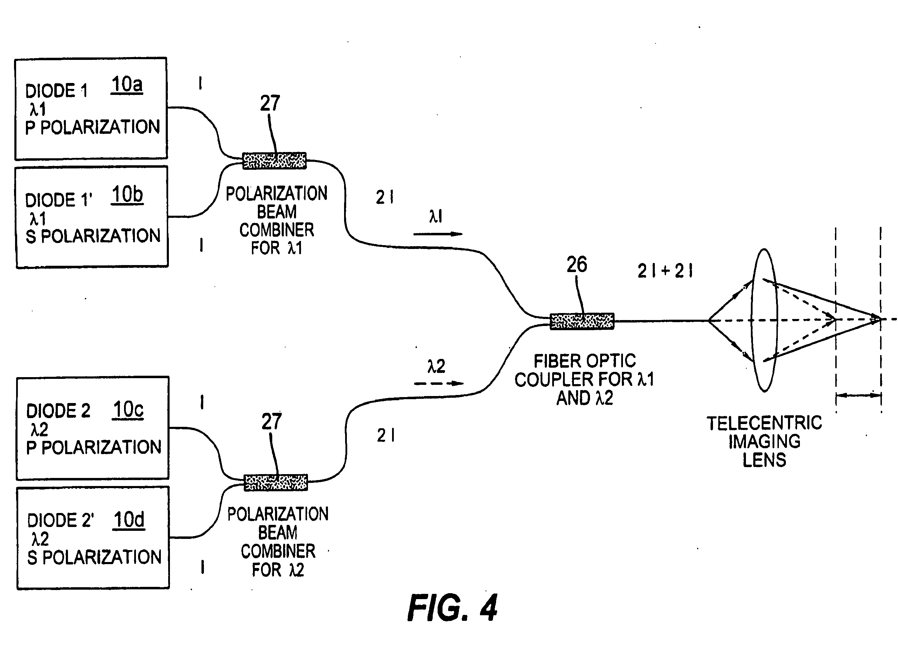

Figure 4 shows the same general concept as Figure 3 for the case of fiber coupled diodes in an embodiment using two different wavelengths. The power of two fiber coupled diodes that emit the same wavelength 10a, 10b is first combined into one fiber by using a polarization fiber-optic combiner 27. Two additional diodes 10c, 10d, which emit a second wavelength are combined into one path.

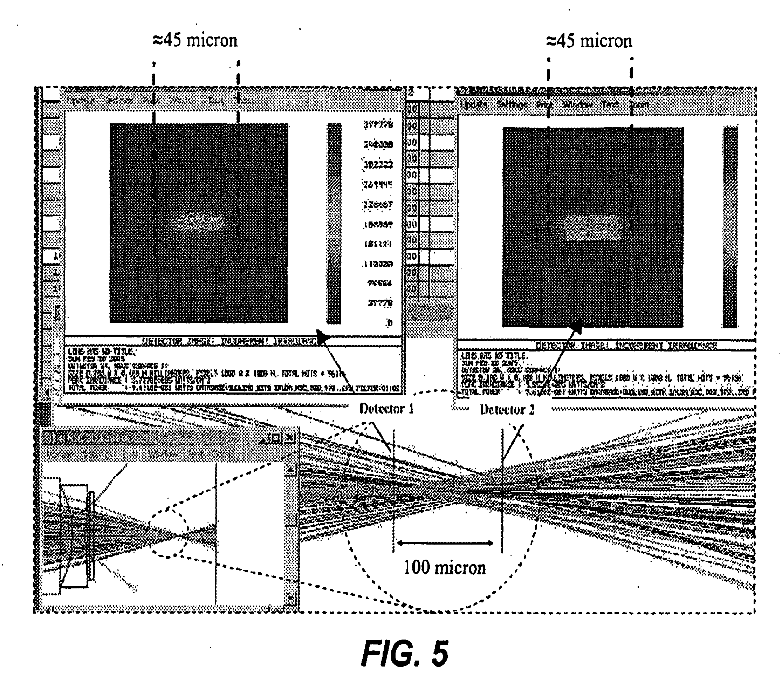

In order to roughly check and present the concept a simulation, shown in Figure 5, using a specific imaging lens and two diodes which emit at 800 nm and 970 nm, was carried out. The results show the ray trace and the spot size as measured by two detectors. The detectors are located at the two focal points, which are shifted in approximately 100 micron relative to each other. The imaging lens can of course be designed in order to achieve a desired shift.

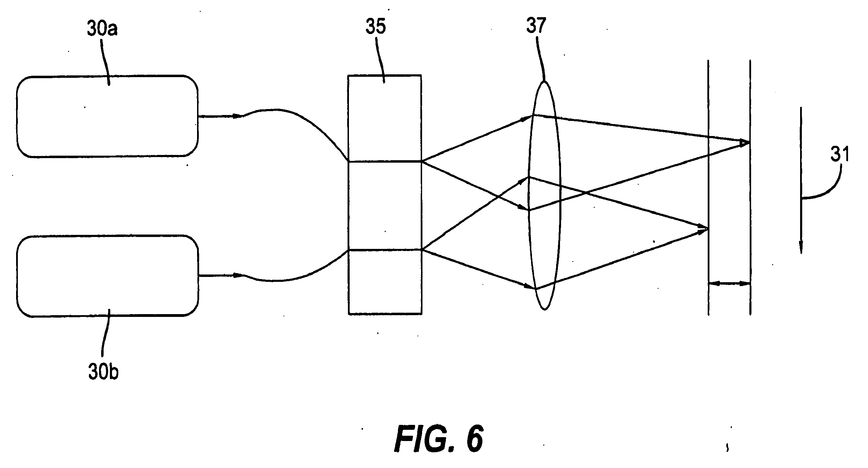

Figure 6 shows laser diodes 30a, 30b with different wavelengths located adjacent to each other. In general, the optical head (not shown) moves along the plate, in the direction indicated by arrow 31. First, laser diode 30b is activated and just then the laser diode 30a, i.e. when it reached the same pixel which was already exposed by laser diode 30b. The embodiment described uses fiber coupled diodes. The description is just for two out of n channels. The same general idea can of course be implemented, with no fibers.

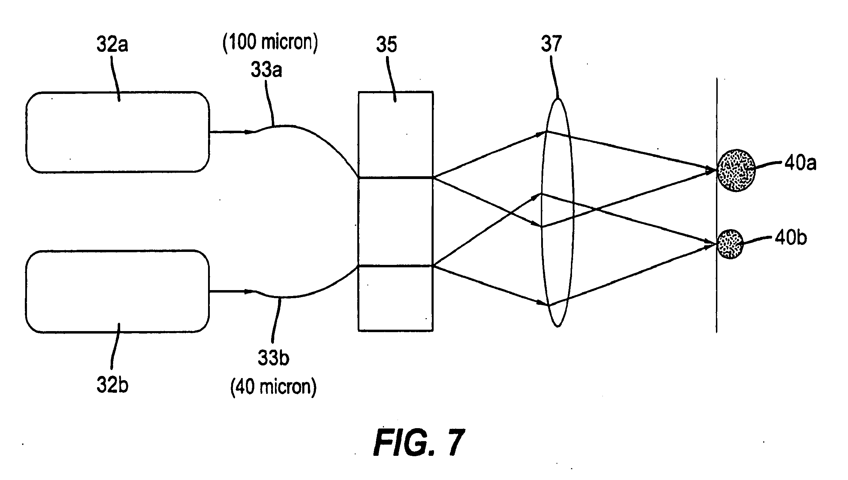

Optical fibers 33a and 33b with different core diameters can be assembled on the same V-groove 35, as shown in Figure 7. This can be implemented for the same or different wavelengths. This way, by using only one imaging lens 37 one can get spots of two sizes. The figures show an example for two laser diodes 32a and 32b of the same wavelength. If optical fiber 33b is a 40 micron fiber and optical fiber 33a is a 100 micron fiber, then by using a 1x2 imaging lens 37 one gets a 20 micron spot 40b and a 50 micron spot 40a.

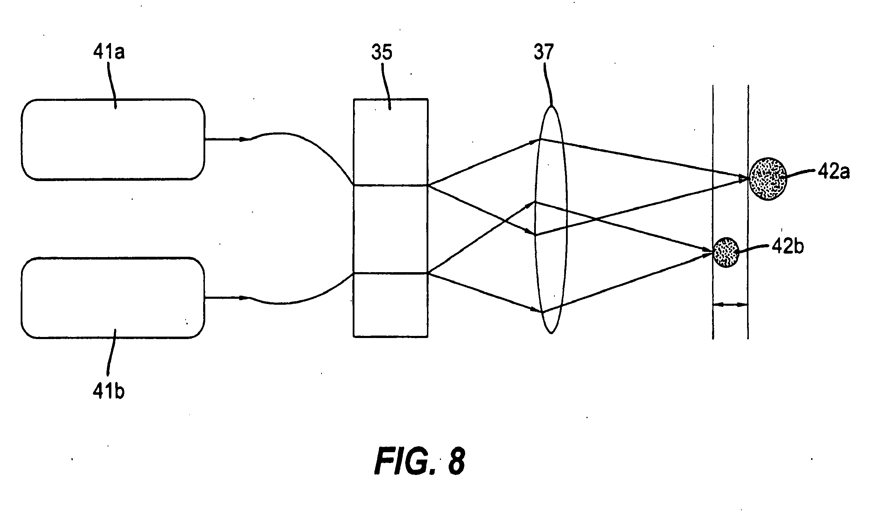

Figure 8 shows the same concept, but now the laser diodes 41 a and 41b emit at different wavelengths. Spots of different diameters 42a and 42b respectively are achieved at different locations.

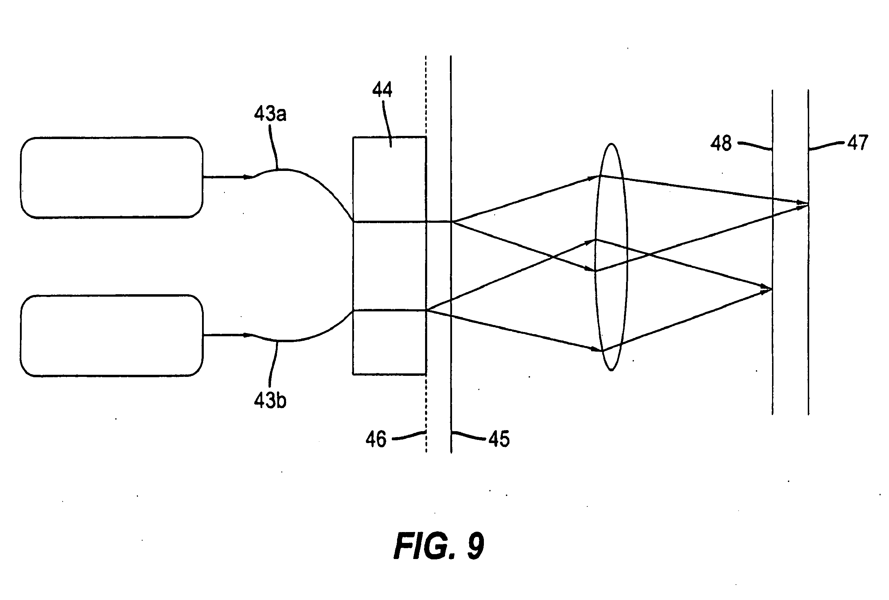

In Figure 9, the distal tips of optical fibers 43a and 43b are assembled in the V-groove 44 in different object planes 45 and 46 respectively relative to each other. As a result, the image planes 47 and 48 of the different fiber tips respectively will be shifted one relative to the other. Figure 9 shows the effect just for two fibers. The optical fibers can be identical, or different, for example with different core diameters. Fibers can emit radiation at the same or different wavelengths.

In any one of the embodiments of Figures 6 through 9, the optical radiation guided in the fiber can be in a filled or an underfilled state. In general, the laser diodes can be temporally modulated relative to each other in order to get different effects on the direct engraving plate.

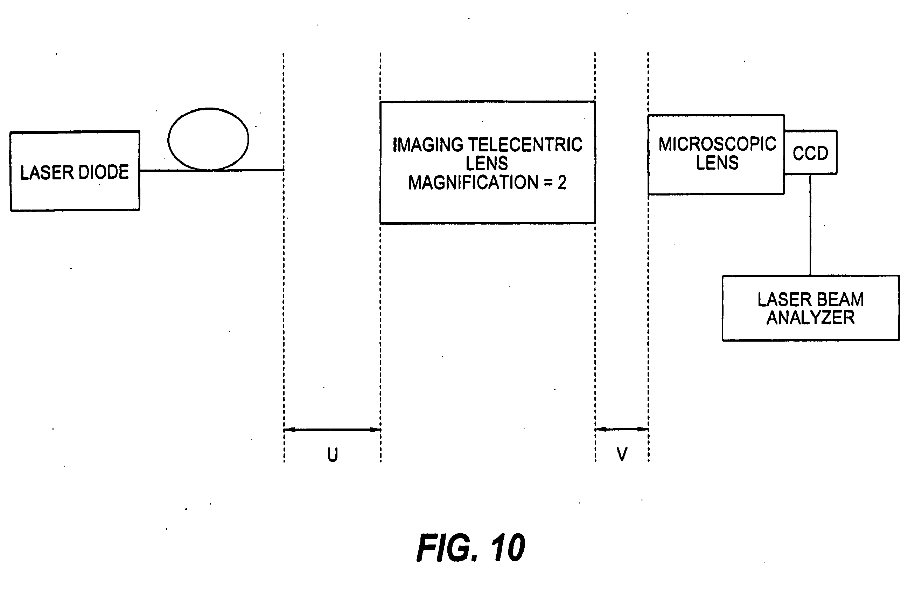

Figure 10 describes an example of a specific measurement system in which the image position shift was measured.

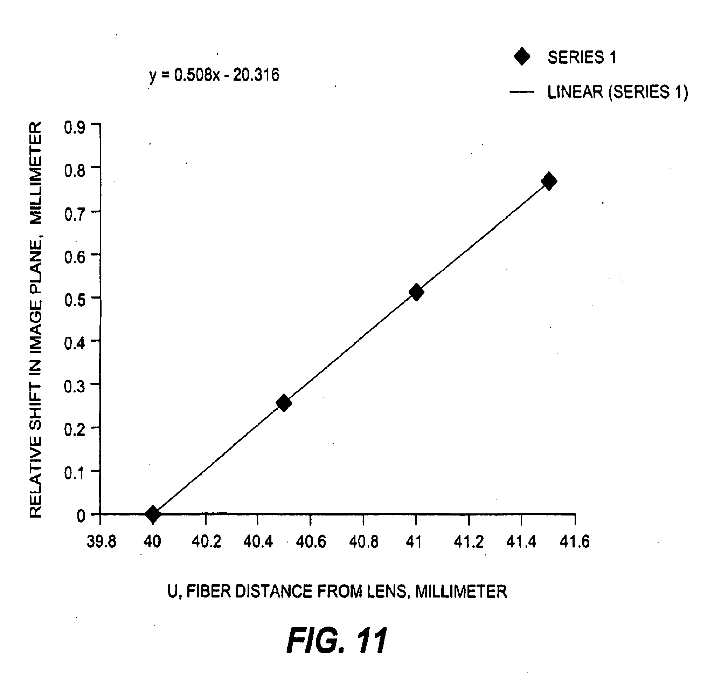

The graph in Figure 11 shows the relative shift in the image position as a function of the position U, of the distal tip of the fiber, as measured by the system of Figure 10. The shift in image position V, was found by moving the position of the microscope lens in order to find the smallest spot. A laser beam analyzer was used to measure and define a spot that includes 95% of the laser beam energy.

For this specific case of using a telecentric imaging lens with a magnification of 2, it can be seen that moving the distal tip of the fiber in the object plane X mm results in a shift of 0.508 X mm in the image position. For example, moving the distal tip of the fiber 0.2 mm, from U=40 to U=40.2, causes the image to move by an absolute relative distance of 0.1 mm.

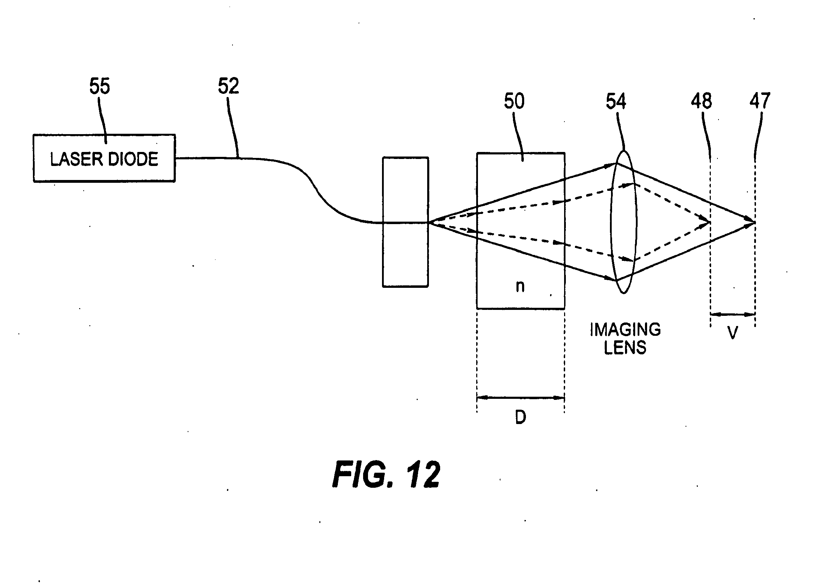

As shown in Figure 12, a glass plate 50 of thickness D placed between the distal tip of the fiber 52 and the imaging lens 54, will cause the image plane to shift from image plane 47 to 48. The shift V in the position of the image plane is a function of the thickness D of the plate and its index of refraction n. The schematic presents the effect of such a glass plate for the specific case of a single laser diode 55. The solid rays describe the case when no plate is used and in which the rays are focused in image plane 47. The dashed rays describe the case when a plate is used and in which the focus is shifted to image plane 48. When a multi laser source constructed from different wavelengths is used the shift V will be a function of the wavelength due to the fact that the index of refraction n, is a function of the wavelength.

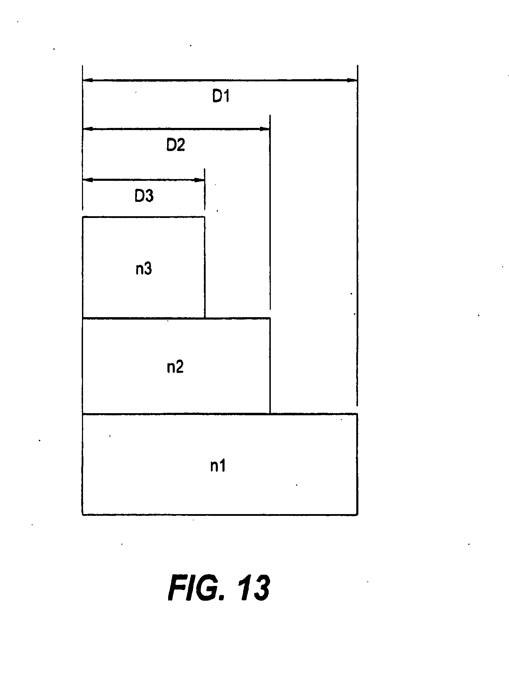

The glass plate can be constructed from several zones, each having a different thickness and different or same index of refraction as depicted in Figure 13. Such a structure enables moving and adjusting the glass plate in front of the fiber tips in order to get a required shift.

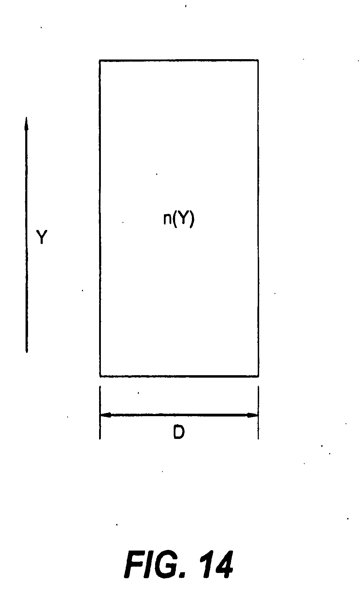

The glass plate can also have a variable profile of the index of refraction that changes along the Y direction. This form of the glass plate is shown in Figure 14. Such a structure enables to move and adjust the right zone of the glass plate in front of the fiber tips in order to get a required shift. The glass plate may also be inserted between the imaging lens and the imaged surface.

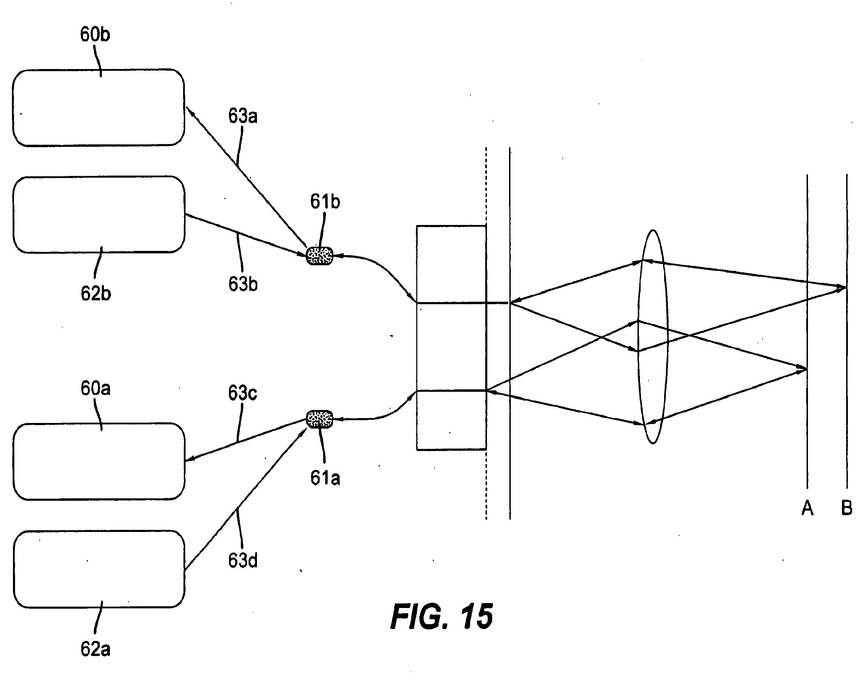

An example of the concept is shown in Figure 15. Optical detectors 60a and 60b, are optically coupled to laser diodes 62a, 62b by fiber optic couplers 61a and 61b and optical fibers 63a through 63d, respectively. The laser radiation that impinges on the printing plate is partially reflected backwards and detected by optical detectors 60a and 60b. The signal at optical detector 60a, V1, and the signal at optical detector 60b, V2, are proportional to the position of the printing plate. When the plate is in position A the signal at optical detector 60a will be at its maximum value, and when the plate is in position B, the signal at optical detector 60b will be at its maximum value. Hence, signals V1 and V2 can be used to adjust the imaging lens at a desired distance relative to the position of the printing plate. Furthermore, the signals V1 and V2 can be used to inspect and diagnose the printing plate after or during the exposure to the laser beam.

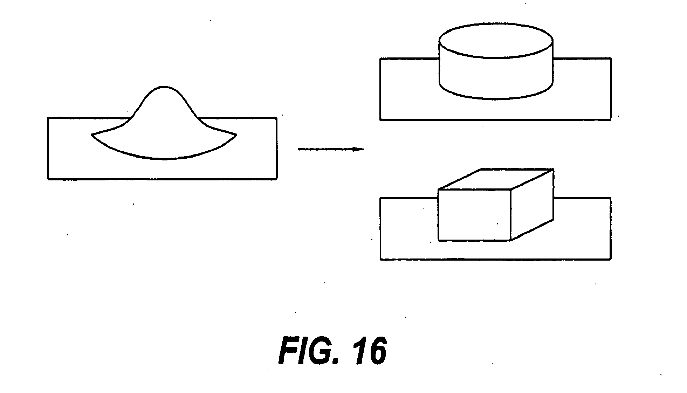

When a single mode diode is used, the Gaussian profile of the beam can be converted, utilizing diffractive optic elements, to be top hat, as depicted in Figure 16 Such diffractive elements are made by several companies, including: www.holoor.co.il/website/data/index.html.

The light source described by Figures 1-16 can be a diode laser and/or a fiber coupled diode laser. The different configurations in which the fibers are aligned relative to each other described by Figures 1-16 can be done relative to the slow and/or fast axis of the printing drum (the slow and fast axis are well known parameters to any one skilled in the printing art).

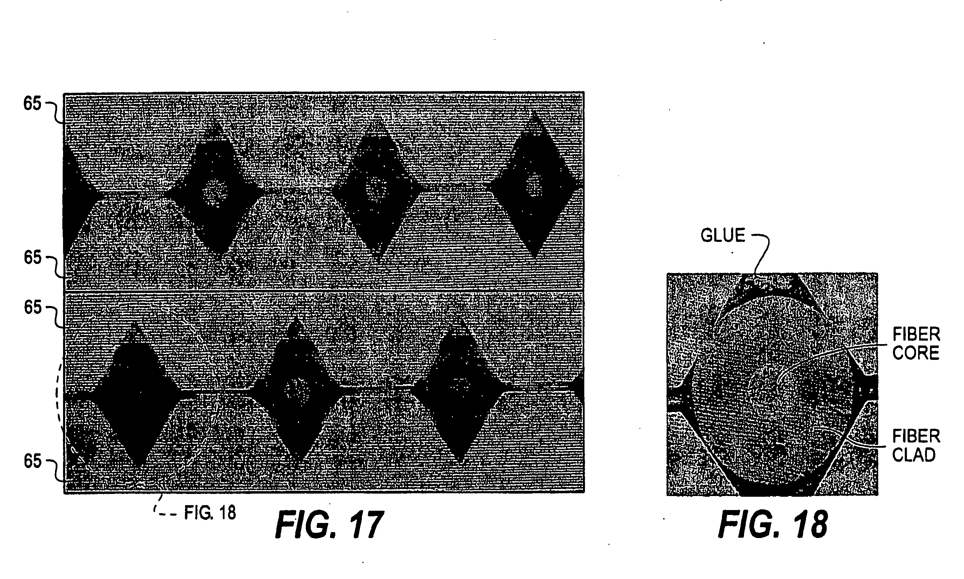

The fibers can be aligned in space in any configuration relative to each other; for example, in a mechanical support, such as a V-groove 65, shown in Figures 17 and 18. The fibers may be aligned one adjacent to the other and/or one above the other, where two or more V-grooves are aligned one on top of the other in a sandwich configuration. The specific case of a sandwich configuration can be seen in Figure 17.

By using diodes at different wavelengths several advantages can be obtained for direct engraving. By a proper optical design the depth of focus can be increased while keeping a relative good spot size which will fit the direct engraving quality.

The diodes can be spatially (by using fibers with different core diameters, or by positioning the distal tips of the fibers at different object planes) and/or temporally modulated relative to each other in order to get different effects on the direct engraving plate. For example, by initiating the first diode before the second diode, etc.

When using laser diodes which emit light at different wavelengths, the multi color light source can be tailored to the special optical and thermal characteristics of a direct engraving printing plate, such as the printing plate described in commonly-assigned copending U.S. Patent Application Serial No. 11/353,217.

The advantages of the present invention are:
- Increasing both the power and depth of focus while keeping a relatively good spot size which will be adequate for the quality needed for direct engraving.
- The lasers can be temporally modulated, simultaneously or relative to each other in order to get a better thermal effect on special engraving plates.
- Direct modulation of the lasers does not require external modulation.

### PARTS LIST

- 10: laser diode
- 10a: wavelength λ2 P polarization
- 10b: wavelength λ2 S polarization
- 10c: wavelength λ1 P polarization
- 10d: wavelength λ1 S polarization
- 12: laser diode
- 16: imaging lens
- 18: focus point
- 20: focus point
- 22: beam combiner
- 24: polarization beam combiner
- 26: fiber optic coupler
- 27: polarization fiber-optic combiner
- 30a: laser diode
- 30b: laser diode
- 31: direction of head movement
- 32a: laser diode
- 32b: laser diode
- 33a: optical fiber
- 33b: optical fiber
- 35: V-groove
- 37: imaging lens
- 40a: spot with 50 microns diameter
- 40b: spot with 20 microns diameter
- 41a: laser diode
- 41b: laser diode
- 42a: spot with 50 microns diameter
- 42b: spot with 20 microns diameter
- 43a: optical fiber
- 43b: optical fiber
- 44: V-groove
- 45: object plane
- 46: object plane
- 47: image plane
- 48: image plane
- 50: glass plate
- 52: optical fiber
- 54: imaging lens
- 55: laser diode
- 60a: optical detector
- 60b: optical detector
- 61 a: fiber optic coupler
- 61b: fiber optic coupler
- 62a: laser diode
- 62b: laser diode
- 63a: optical fiber
- 63b: optical fiber
- 63c: optical fiber
- 63d: optical fiber
- 65: V-groove

## Claims

1. A direct engraving printing system including an optical imaging head for direct engraving of a flexographic printing plate, said optical imaging head comprising:
a first laser diode (10, 10a, 10b, 30a, 41a) emitting radiation in at a first wavelength; and
a second laser diode (12, 10c, 10d, 30b, 41b) emitting radiation at a second wavelength, **characterised by**
means for imaging having a lens (16, 37, 54) for imaging said. first and second wavelengths of radiation on a region of the flexographic printing plate; and
wherein said first and second wavelengths are imaged at different depths relative to a surface of said plate.

2. The optical imaging head of claim 1 wherein said laser diodes are fiber-coupled.

3. The optical imaging head of claim 1 or 2 wherein said lens comprises a telecentric lens.

4. The optical imaging head of claim 1 wherein said laser diodes (10, 12) are multi mode and/or single mode laser diodes.

5. The optical imaging head of claim 1 wherein said laser diodes are coupled using wavelength dependent beam combiners (26).

6. The optical imaging head of claim 1 wherein said laser diodes are coupled using polarization dependent beam combiners (24, 27).

7. The optical imaging head of claim 1 comprising means to temporally modulate directly the lasers relative to each other.

8. The optical imaging head of claim 1 wherein said means for imaging comprise a glass plate (50) in the optical path.

9. The optical imaging head of claim 1 wherein said means for imaging comprise dispersive optical elements.

10. The optical imaging head of claim 1 wherein said imaging at different depths relative to said plate surface is achieved by adjusting said diodes or a distal tip of said fibers are in different object planes of a telecentric lens.

11. The optical imaging head of claim 1 wherein diffractive optic elements convert a Gaussian profile of the beam to a top hat shape.

12. The optical imaging head of claim 2 wherein said fiber coupled laser diodes are provided with different core diameters in order to engrave different size spots on said plate.

13. The optical imaging head of claim 1 additionally comprising:
means to inspect and diagnose said printing plate after or during radiation.

## Patentansprüche

1. Direktgravur-Drucksystem mit einem optischen Abbildungskopf zum Direktgravieren einer flexografischen Druckplatte, wobei der optische Abbildungskopf umfasst:
eine erste Laserdiode (10, 10a, 10b, 30a, 41a), die Strahlung mit einer ersten Wellenlänge abstrahlt; und
eine zweite Laserdiode (12, 10c, 10d, 30b, 41b), die Strahlung mit einer zweiten Wellenlänge abstrahlt;
**gekennzeichnet durch**
Abbildungsmittel, die ein Objektiv (16, 37, 54) umfassen zum Abbilden der ersten und zweiten Strahlungswellenlänge auf einen Bereich der flexografischen Druckplatte; und
worin die erste und zweite Wellenlänge in unterschiedlichen Tiefen bezüglich einer Oberfläche der Platte abgebildet werden.

2. Optischer Abbildungskopf nach Anspruch 1, worin die Laserdioden fasergekoppelt sind.

3. Optischer Abbildungskopf nach Anspruch 1 oder 2, worin das Objektiv ein telezentrisches Objektiv aufweist.

4. Optischer Abbildungskopf nach Anspruch 1, worin die Laserdioden (10, 12) im Mehrfachmodus und/oder im Einfachmodus arbeitende Laserdioden sind.

5. Optischer Abbildungskopf nach Anspruch 1, worin die Laserdioden gekoppelt sind unter Verwendung wellenlängenabhängiger Strahlkombinierer (26).

6. Optischer Abbildungskopf nach Anspruch 1, worin die Laserdioden gekoppelt sind unter Verwendung polarisationsabhängiger Strahlkombinierer (24, 27).

7. Optischer Abbildungskopf nach Anspruch 1, mit Mitteln zum zeitweiligen direkten Modulieren der Laser relativ zueinander.

8. Optischer Abbildungskopf nach Anspruch 1, worin die Abbildungsmittel eine Glasplatte (50) im optischen Pfad aufweisen.

9. Optischer Abbildungskopf nach Anspruch 1, worin die Abbildungsmittel dispersive optische Elemente aufweisen.

10. Optischer Abbildungskopf nach Anspruch 1, worin das Abbilden in unterschiedlichen Tiefen bezüglich der Plattenoberfläche durch Einstellen der Dioden oder einer distalen Spitze der Fasern in unterschiedlichen Objektebenen eines telezentrischen Objektivs erfolgt.

11. Optischer Abbildungskopf nach Anspruch 1, worin diffraktive optische Elemente ein Gauss'sches Profil des Strahls in eine Top-Hat Form umwandeln.

12. Optischer Abbildungskopf nach Anspruch 2, worin die fasergekoppelten Laserdioden mit unterschiedlichen Kerndurchmessern versehen sind, um Punkte unterschiedlicher Größe auf die Platte zu gravieren.

13. Optischer Abbildungskopf nach Anspruch 1, zusätzlich mit:
Mitteln zum Prüfen und Diagnostizieren der Druckplatte nach oder während der Bestrahlung.

## Revendications

1. Système d'impression par gravure directe incluant une tête de formation d'image optique destinée à une gravure directe d'une plaque d'impression flexographique, ladite tête de formation d'image optique comprenant :
une première diode laser (10, 10a, 10b, 30a, 41a) émettant un rayonnement dans au moins une première longueur d'onde ; et
une deuxième diode laser (12, 10c, 10d, 30b, 41b) émettant un rayonnement à une deuxième longueur d'onde,
**caractérisé par**
un moyen destiné à une formation d'image comportant une lentille (16, 37, 54) destinée à former une image desdites première et deuxième longueurs d'onde d'un rayonnement sur une région de la plaque d'impression flexographique ; et
où lesdites première et deuxième longueurs d'onde sont formées en image à différentes profondeurs par rapport à une surface de ladite plaque.

2. Tête de formation d'image optique selon la revendication 1, dans laquelle lesdites diodes laser sont couplées à des fibres.

3. Tête de formation d'image optique selon la revendication 1 ou 2, dans laquelle ladite lentille comprend une lentille télécentrique.

4. Tête de formation d'image optique selon la revendication 1, dans laquelle lesdites diodes laser (10, 12) sont des diodes laser à multiples modes et/ou à mode unique.

5. Tête de formation d'image optique selon la revendication 1, dans laquelle lesdites diodes laser sont couplées en utilisant des mélangeurs de faisceaux en fonction d'une longueur d'onde (26).

6. Tête de formation d'image optique selon la revendication 1, dans laquelle lesdites diodes laser sont couplées en utilisant des mélangeurs de faisceaux en fonction d'une polarisation (24, 27).

7. Tête de formation d'image optique selon la revendication 1, comprenant un moyen destiné à moduler dans le temps de manière directe les lasers l'un par rapport à l'autre.

8. Tête de formation d'image optique selon la revendication 1, dans laquelle ledit moyen destiné à une formation d'image comprend une plaque de verre (50) dans le trajet optique.

9. Tête de formation d'image optique selon la revendication 1, dans laquelle ledit moyen destiné à une formation d'image comprend des éléments optiques dispersifs.

10. Tête de formation d'image optique selon la revendication 1, dans laquelle ladite formation d'image à différentes profondeurs par rapport à ladite surface de plaque est réalisée par l'ajustement desdites diodes ou bien des extrémités distales desdites fibres sont dans des plans objets différents d'une lentille télécentrique.

11. Tête de formation d'image optique selon la revendication 1, dans laquelle les éléments optiques diffractifs convertissent un profil gaussien du faisceau en une forme de type chapeau haut-de-forme.

12. Tête de formation d'image optique selon la revendication 2, dans laquelle lesdites diodes laser couplées à des fibres sont dotées de diamètres du coeur différents de manière à graver des points de différentes dimensions sur ladite plaque.

13. Tête de formation d'image optique selon la revendication 1, comprenant en outre :
un moyen destiné à inspecter et à diagnostiquer ladite plaque impression après ou pendant un rayonnement.
